# EUROPÄISCHE PATENTSCHRIFT

(11) **EP 3 468 740 B1**
(45) Veröffentlichungstag und Bekanntmachung des Hinweises auf die Patenterteilung: **23.11.2022**
(21) Anmeldenummer: 17748465.6
(22) Anmeldetag: 02.08.2017
(51) Int. Cl.: B23K 1/00, B23K 1/19, B23K 1/20, B23K 15/00, B23K 20/00, B23K 20/233, B23K 20/24, C04B 37/02, F01D 5/00, B23K 26/342, B22F 3/105, B23K 101/00, B23K 103/18

(54) **VERFAHREN ZUM FÜGEN VON WERKSTOFFEN DURCH VERWENDUNG EINER MIT EINEM ADDITIVEN VERFAHREN HERGESTELLTEN GITTERSTRUKTUR**
METHOD OF JOINING MATERIALS USING A GRID STRUCTURE ACHIEVED BY ADDITIVE MANUFACTURING
PROCÉDÉ D'ASSEMBLAGE DE MATÉRIAUX UTILISANT UNE STRUCTURE GRILLAGÉE RÉALISÉE PAR FABRICATION ADDITIVE

(30) Priorität: 09.08.2016 DE 102016214742
(43) Veröffentlichungstag der Anmeldung: 17.04.2019
(73) Patentinhaber: Siemens Energy Global GmbH & Co. KG, 81739 München (DE)
(72) Erfinder: BLANK, Robin, 14167 Berlin (DE); NÄGEL, Thomas, 14059 Berlin Charlottenburg-Wilmersdorf (DE); REINKENSMEIER, Ingo, 58730 Fröndenberg (DE)
(86) Internationale Anmeldenummer: PCT/EP2017/069559
(87) Internationale Veröffentlichungsnummer: WO 2018/029060

(56) Entgegenhaltungen:
- DE-A1-102011 077 620
- JP-A- H0 264 071
- JP-A- S59 137 378
- JP-A- 2010 179 313
- US-A1- 2013 157 000
- US-A1- 2015 322 808

## Beschreibung

Die vorliegende Erfindung betrifft ein Verfahren zum Fügen bzw. Verbinden von Werkstoffen entsprechend dem Oberbegriff des Anspruchs 1 (siehe z.B. JP H02 64071 A).

Die Werkstoffe können beispielsweise in Form von fertigen Bauteilen oder teilweise hergestellten Bauteilen vorliegen oder bereitgestellt werden.

Bei den genannten Bauteilen kann es sich um Bauteile für den Einsatz in einer Strömungsmaschine, vorzugsweise einer Gasturbine handeln. Das Bauteil besteht vorzugsweise aus einer Superlegierung, insbesondere einer nickel- oder kobaltbasierten Superlegierung. Die Superlegierung kann ausscheidungsgehärtet oder ausscheidungshärtbar sein. Vorzugsweise findet das Bauteil Anwendung in einem Heißgaspfad oder Heißgasbereich einer Strömungsmaschine, wie einer Gasturbine.

Eine Verbundbeschichtung für eine Gasturbine, umfassend ein Metallsubstrat, eine Trägerstruktur und ein keramisches Füllmaterial sowie ein Verfahren zur Herstellung der Verbundbeschichtung ist beispielsweise beschrieben in EP 1 165 941 B1. Beim Fügen, beispielsweise durch Löten, von artfremden Werkstoffen, beispielsweise Metall und Keramik treten häufig Spannungen im Bereich der Verbindungsstelle (Lötstelle) durch unterschiedliche wärmebedingte Ausdehnungsverhalten oder thermische Ausdehnungskoeffizienten beider Werkstoffe auf. Die unterschiedlichen thermischen Ausdehnungen senken das Festigkeitsverhalten, durch mechanische, thermische und/oder thermomechanische Spannungen, welche im Bereich der Verbindungsstelle der Werkstoffe und/oder in den Werkstoffen auftreten.

Durch die genannten Spannungen können insbesondere im Betrieb thermisch hochbelasteter Verbundbauteile oder Verbundwerkstoffe, Risse und/oder Ablösungen einzelner Schichten oder in Verbundbestandteilen entstehen. Dies ist insbesondere ein Problem bei heißgasbeaufschlagten Turbinenkomponenten, wie beispielsweise Schaufeln oder anderen Heißgasteilen. Schlimmstenfalls können die unterschiedlichen thermischen Ausdehnungen gar zur Zerstörung der charakteristischen Eigenschaften zumindest einer der beiden Werkstoffe führen.

Die genannten mechanischen Spannungen beeinträchtigen insbesondere dadurch die Festigkeit eines entsprechenden Verbundbauteils, dass Temperaturgradienten sowohl innerhalb einzelner Fügebestandteile, beispielsweise metallischer und/oder keramischer Werkstoffe auftreten, als auch entlang einer Verbindung der entsprechenden Füge- oder Verbundbestandteile.

Dieses Problem wurde bisher durch die Verwendung von, insbesondere duktilen, Zwischenschichten, Haftvermittlungsschichten oder Pufferschichten im Bereich von beispielsweise einem oder wenigen Millimetern Dicke gelöst. Diese Schichten gleichen die beschriebenen thermisch induzierten unterschiedlichen Ausdehnungen der Fügekomponenten beispielsweise durch elastische und/oder plastische Verformung zumindest teilweise aus oder bewirken eine Relaxation der Spannungen, welche beispielsweise im Bereich der Lötverbindung auftreten. Bei den Pufferschichten kann es sich um Kupfer, Silber und/oder Titan basierte Schichten handeln, welche üblicherweise jedoch eine geringe Oxidationsbeständigkeit aufweisen und demnach für Fügekomponenten oder zu fügende Bauteile, welche für eine hohe thermische Belastbarkeit ausgelegt sind, ungeeignet sind.

Ein weiterer Nachteil dieser Puffer- bzw. Zwischen- oder Haftvermittlungsschichten betrifft deren Herstellbarkeit in lediglich verhältnismäßig geringen Schichtdicken, da die Schichtdicken durch das Missverhältnis der thermischen Ausdehnungskoeffizienten der beteiligten Fügewerkstoffe beschränkt sein können, bzw. nicht jeder beliebige "missmatch" (englisch: für "Fehlanpassung") der thermischen Ausdehnung der Fügepartner über Pufferschichten ausgeglichen werden kann. Weiterhin verkompliziert die Beteiligung dieser Zwischenschichten den Fügeprozess und bringt potenziell weitere Verunreinigungsquellen in das Verbundmaterial ein.

Es ist daher eine Aufgabe der vorliegenden Erfindung, ein verbessertes Verfahren zum Fügen von Werkstoffen anzugeben, sowie einen entsprechend verbesserten Werkstoffverbund. Insbesondere wird ein verbessertes Verfahren vorgestellt, welches das Fügen von artfremden Verbindungen oder Komponenten ohne Zwischenschichten und in einem quasi-einstufigen Füge-, insbesondere Lötprozess, ermöglicht. Mit anderen Worten ist keine Zwischen- Puffer-, oder Haftvermittlungsschicht mehr zwischen den Fügeparametern vorzusehen. Weiterhin ist keine Metallisierung, beispielsweise des zweiten Werkstoffs nötig.

Diese Aufgabe wird durch den Gegenstand des unabhängigen Anspruchs 1 gelöst.

Vorteilhafte Ausgestaltungen sind Gegenstand der abhängigen Patentansprüche.

Die Erfindung betrifft ein Verfahren zum Fügen von Werkstoffen bzw. ein Verfahren zum Herstellen eines Werkstoffverbunds bzw. eines Verbundmaterials.

Das Verfahren umfasst das Bereitstellen eines ersten Werkstoffs oder Fügepartners und das Bereitstellen eines zweiten Werkstoffs oder Flugfügepartners.

Der erste Werkstoff ist entsprechend der Erfindung ein metallischer Werkstoff.

Der zweite Werkstoff ist entsprechend der Erfindung ein keramischer Werkstoff.

Das Verfahren entsprechend der Erfindung umfasst weiterhin das Versehen des ersten Werkstoffs an einer Verbindungsstelle oder Fügestelle des ersten Werkstoffs mit einer Gitterstruktur. Die Verbindungsstelle bezeichnet vorzugsweise eine zum Verbinden oder Fügen vorgesehene Seite oder Kante des Werkstoffs beispielsweise eine Fläche.

In einer Ausgestaltung umfasst das Verfahren das Versehen der Gitterstruktur und/oder des zweiten Werkstoffs mit einem Lot.

Das Verfahren entsprechend der Erfindung umfasst weiterhin das Verbinden, insbesondere das Verlöten des zweiten Werkstoffs mit der Gitterstruktur oder umgekehrt, so dass ein Verbundmaterial oder Werkstoffverbund aus dem ersten Werkstoff und dem zweiten Werkstoff entsteht, wobei die Gitterstruktur derart ausgebildet wird, dass Spannungen in dem Werkstoff und durch die Gitterstruktur zumindest teilweise oder vollständig kompensiert werden.

Durch das Versehen des ersten Werkstoffs mit der Gitterstruktur kann, wie oben angedeutet, vorteilhafterweise ähnlich zu der Wirkungsweise der Pufferschicht ein Spannungsabbau durch Aufnahme der Spannungen durch die Gitterstruktur erfolgen. Vorteilhafterweise ist man jedoch im Gegensatz zur Anwendung einer Zwischen- oder Pufferschicht weder an eine bestimmte Schichtdicke gebunden, noch besteht die Gefahr, Verunreinigungen in den Werkstoffverbund einzubringen. Dies ist insbesondere der Fall, da die Gitterstruktur vorzugsweise inhärent bei dem Bauteil oder der Komponente des ersten Werkstoffs aufgebaut oder bereitgestellt wird und demnach vorzugsweise aus genau demselben Material wie der erste Werkstoff oder einem artgleichen Material besteht. Aus diesem Grund kann der Verbundwerkstoff gleichfalls temperaturbeständiger und/oder oxidationsbeständiger ausgebildet werden, als beispielsweise ein eine Zwischenschicht umfassender Verbund.

Der erste Werkstoff und der zweite Werkstoff können beide in Form einer Komponente oder eines Bauteils vorliegen.

Bei dem Verbinden des zweiten Werkstoffs mit der Gitterstruktur bzw. über die Gitterstruktur mit dem ersten Werkstoff, handelt es sich vorzugsweise um ein Verlöten, insbesondere ein Hartlöten. Bei dem Lot kann es sich beispielsweise um ein Hartlot und/oder um ein Aktivlot handeln.

In einer Ausgestaltung ist der erste Werkstoff eine Turbinenkomponente, beispielsweise einer im Heißgaspfad einer Gasturbine angewendeten Komponente darstellen. Die genannte Legierung kann eine ausscheidungsgehärtete oder ausscheidungshärtbare Superlegierung, beispielweise eine durch die γ- oder γ'-Phase oder deren Phasenausscheidung gehärtete Legierung, sein.

Das Verbinden eines metallischen Werkstoffs mit einem keramischen Werkstoff oder umgekehrt stellt insbesondere bei der Herstellung von Turbinenkomponenten potenziell eine besonders interessante und funktionelle Kombination dar.

Entsprechend der Erfindung ist die Gitterstruktur aus demselben Material wie der erste Werkstoff hergestellt.

Demgemäß, kann der erste Werkstoff beispielsweise zusammen mit der Gitterstruktur eine funktional eigenständige Komponente oder ein Bauteil bilden.

In an Ausgestaltung handelt es sich bei der Gitterstruktur um ein kubisch-flächenzentriertes oder fcc-Gitter (fcc: englisch für "face centered cubic").

In einer Ausgestaltung weist die Gitterstruktur Gitterstreben mit einem Durchmesser oder einer Breite zwischen 0,5 mm und 2,5 mm, insbesondere von 1,5 mm, auf.

In einer Ausgestaltung weist die Gitterstruktur Raumdiagonalen einer entsprechenden Elementarzelle des durch die Gitterstruktur gebildeten Gitters zwischen 4 mm und 8 mm, insbesondere 6 mm, auf.

Diese Ausgestaltungen sind insbesondere zweckmäßig und vorteilhaft zur Lösung der der vorliegenden Erfindung zugrunde liegenden Aufgabe. Insbesondere kann durch die beschriebenen Geometrien und Dimensionen besonders vorteilhaft eine Spannungsrelaxation wie oben beschrieben erzielt werden.

Die Gitterstruktur ist entsprechend der Erfindung mit einem additiven Herstellungsverfahren, beispielsweise selektivem Laserschmelzen oder Elektronenstrahlschmelzen hergestellt. Mit anderen Worten wird der ersten Werkstoff vorzugsweise mittels der beschriebenen Verfahren mit der Gitterstruktur versehen.

In einer Ausgestaltung wird der erste Werkstoff mit einem additiven Herstellungsverfahren, beispielsweise selektivem Laserschmelzen oder Elektronenstrahlschmelzen hergestellt. Diese Ausgestaltungen bieten den Vorteil, dass die Gitterstruktur ohne großen verfahrenstechnischen Aufwand inhärent zusammen mit dem ersten Werkstoff oder der diesen darstellende oder umfassende Komponente bereitgestellt

Additive Fertigungsverfahren ermöglichen möglicherweise überhaupt erst den Aufbau von Gitterstrukturen, da entsprechend komplexe, verschachtelte und/oder verzweigte Strukturen mit konventioneller (subtraktiver oder spanend abtragender) Fertigung unter Umständen nicht herstellbar sind. Darüber hinaus bieten additive Fertigungsverfahren bekanntermaßen den Vorteil einer fast unbegrenzten Designfreiheit.

Generative oder additive Herstellungsverfahren umfassen beispielsweise das selektive Laserschmelzen (SLM) oder das Elektronenstrahlschmelzen (EBM). Zu den genannten Strahlschweißverfahren gehören beispielsweise das Elektronenstrahlschweißen oder das Laserauftragschweißen (LMD).

Additive Fertigungsverfahren (englisch: "additive manufacturing") haben sich als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils direkt auf Basis einer entsprechenden CAD-Datei erfolgen kann.

In einer Ausgestaltung wird die Gitterstruktur in demselben Herstellungsverfahren, vorzugsweise unmittelbar, mit dem ersten Werkstoff zusammen hergestellt oder bereitgestellt, um eine Verbundkomponente zu bilden.

In einer Ausgestaltung ist die genannte Verbundkomponente ein Teil einer Gasturbine, vorzugsweise ein im Betrieb der Gasturbine heißgasbeaufschlagtes Teil derselben.

In einer Ausgestaltung wird der zweite Werkstoff über die Gitterstruktur mit dem erstem Werkstoff verlötet.

In einer Ausgestaltung ist das genannte Lot ein Hart-und/oder Aktivlot und enthält beispielsweise Silber, Kupfer und/oder Titan.

In einer Ausgestaltung wird die Gitterstruktur, zweckmäßigerweise vor dem Verbinden bzw. Verlöten, mit einem Lot-Binder-Gemisch und/oder einem Lot-Füller-Gemisch infiltriert oder gefüllt. Dies bietet unter Umständen den Vorteil, dass die Gitterstruktur weiter mechanisch stabilisiert werden kann, wobei nicht auf die spannungsrelaxierenden Eigenschaften der Gitterstruktur hinsichtlich thermisch induzierter Spannungen verzichtet werden muss.

Das genannte Lot-Binder-Gemisch bzw. Lot-Füller-Gemisch kann beispielsweise ebenfalls ein Hartlot und/oder ein Aktivlot umfassen.

Weitere Einzelheiten der Erfindung werden nachfolgend anhand der Figuren beschrieben.
- Figur 1: zeigt eine schematische Schnitt- oder Seitenansicht von Komponenten eines Werkstoffverbunds.
- Figur 2: zeigt zumindest teilweise eine schematische Schnitt- oder Seitenansicht des Werkstoffverbunds.
- Figur 3: deutet schematisch anhand eines Flussdiagramms Verfahrensschritte eines erfindungsgemäßen Verfahrens zum Fügen von Werkstoffen an.
- Die Figuren 4 bis 7: deuten schematisch und vereinfacht Spannungsverhältnisse des erfindungsgemäßen Werkstoffverbunds an.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

Anhand der Figuren wird im Folgenden ein Verfahren zum Fügen von Werkstoffen bzw. ein Verfahren zum Herstellen eines Werkstoffverbunds gemäß der vorliegenden Erfindung beschrieben.

Das Verfahren ist ein Verfahren zum Fügen beziehungsweise Verbinden von Werkstoffen, insbesondere eines ersten Werkstoffs W1 und eines zweiten Werkstoffs W2. Vorzugsweise beschreibt das Verfahren ein Lötverfahren zum Verlöten des ersten Werkstoffs W1 mit dem zweiten Werkstoff 2, oder umgekehrt.

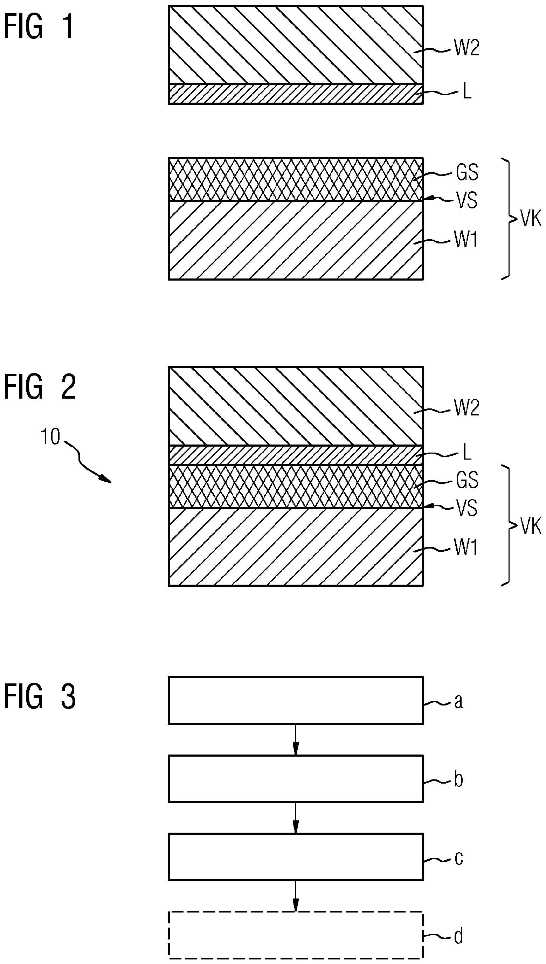

Entsprechend der Erfindung umfasst das Verfahren das Bereitstellen des ersten Werkstoffs W1 (vgl. a) in Figur 3). Der erste Werkstoff ist ein metallischer Werkstoff.

Der erste Werkstoff kann weiterhin in Form eines Bauteils oder einer Komponente, vorzugsweise eine Turbinenkomponente oder einer beispielsweise im Heißgaspfad einer Gasturbine angewendeten Komponente, vorliegen. Demgemäß kann der erste Werkstoff eine Superlegierung, beispielweise eine nickel- oder kobaltbasierte Superlegierung umfassen oder aus dieser bestehen.

Die genannte Legierung kann eine ausscheidungsgehärtete oder ausscheidungshärtbare Superlegierung, beispielweise eine durch die γ- oder γ'-Phase oder deren Phasenausscheidung gehärtete Superlegierung sein. Alternativ kann der erste Werkstoff einen anderen Werkstoff bezeichnen.

Weiterhin umfasst das Verfahren das Bereitstellen des zweiten Werkstoffs W2. Der zweite Werkstoff ist ein keramischer Werkstoff.

Insbesondere kann es sich bei dem zweiten Werkstoff um einen keramischen Faserverbundwerkstoff handeln, beispielsweise um einen CMC-Werkstoff (englisch für "ceramic matrix composite"). Alternativ kann der zweite Werkstoff einen anderen Werkstoff bezeichnen.

Der erste Werkstoff W1 ist in Figur 1 unten, und der zweite Werkstoff W2 ist in Figur 1 oben angedeutet. Synonym kann jeweils mit dem ersten Werkstoff und dem zweiten Werkstoff eine entsprechende Komponente, beispielsweise eine erste Komponente und eine zweite Komponente bezeichnet sein.

Das Verfahren umfasst weiterhin das Versehen des ersten Werkstoffs W1 mit einer Gitterstruktur GS, und zwar an einer für das Fügen oder die Verbindung vorgesehenen Verbindungsstelle VS (vgl. b) in Figur 3). In Figur 1 ist der erste Werkstoff 1 bereits vorzugsweise stoffschlüssig mit der Gitterstruktur GS versehen oder verbunden dargestellt.

Die Verbindungsstelle VS bezeichnet vorzugsweise eine mit dem zweiten Werkstoff W2 zu verbindende oder zu fügende Oberseite des ersten Werkstoffs oder des entsprechenden Bauteils.

Über die Gitterstruktur GS soll erfindungsgemäß eine Spannungsrelaxation für einen aus dem ersten Werkstoff und dem zweiten Werkstoff entstehenden Werkstoffverbund bewirkt werden. Demgemäß ist die Gitterstruktur GS vorzugsweise derart angeordnet und ausgebildet, dass Spannungen, das heißt mechanische, thermische und/oder thermo-mechanische Spannungen, welche beispielsweise - ohne die Vorsehung der Gitterstruktur GS bei einem Verbinden oder Verlöten des ersten Werkstoffs mit dem zweiten Werkstoff entstehen würden - zumindest teilweise oder wesentlich ausgeglichen oder kompensiert werden können.

Durch die Gitterstruktur GS kann mit Vorteil auf eine Zwischen- oder Pufferschicht verzichtet werden, welche beispielsweise zum Ausgleichen von Unterschieden der thermischen Ausdehnungskoeffizienten der zu führenden Komponenten vorgesehen ist. Als weiterer Vorteil ermöglicht das erfindungsgemäße Fügen über eine entsprechende Gitterstruktur GS die Ausbildung des Werkstoffverbunds mit einer besonders hohen Temperaturbeständigkeit, welche gegenüber Werkstoffen mit konventionellen Zwischen- oder Pufferschichten auf Silber und/oder Kupfer-Basis verbessert ist.

Ein Werkstoffverbund, welcher erfindungsgemäß hergestellt ist weist gegenüber konventionellen oder konventionell gefügten Verbundwerkstoffen mit Vorteil ebenfalls eine verbesserte Oxidationsbeständigkeit auf.

Die Gitterstruktur GS kann beispielsweise Gitterabstände und /oder Gitterdurchmesser im Bereich von Zehntel Millimetern bis hin zu einigen Millimetern oder Zentimetern haben.

Bei der Gitterstruktur kann es sich um ein kubisch-flächenzentriertes oder fcc-Gitter handeln. Die Gitterstruktur GS kann weiterhin Gitterstreben (nicht explizit gekennzeichnet) mit einem Durchmesser zwischen 0,5 mm und 2,5 mm, insbesondere von 1,5 mm, aufweisen und Raumdiagonalen einer entsprechenden Elementarzelle des Gitters mit Abmessungen zwischen 4 mm und 8 mm, insbesondere 6 mm, auf.

Die Gitterstruktur GS kann ebenfalls funktional der durch den ersten Werkstoff dargestellten Komponente zugeordnet sein. Mit anderen Worten kann gemäß der vorliegenden Erfindung ein entsprechend zu fügendes Bauteil, welches aus dem ersten Werkstoff hergestellt sein kann, inhärent während der Herstellung mit der Gitterstruktur GS versehen werden.

Entsprechend der Erfindung sind der erste Werkstoff und die Gitterstruktur aus demselben oder gleichen Materialien hergestellt oder herstellbar.

Die Gitterstruktur ist entsprechend der Erfindung durch ein additives Herstellungsverfahren erzeugt. Für eine vorteilhafte und/oder zweckmäßige Herstellung der Komponente des ersten Werkstoffs W1 und/oder der Gitterstruktur GS wird vorzugsweise ein additives Herstellungsverfahren, beispielsweise selektives Laserschmelzen (SLM), Elektronenstrahlschmelzen (EBM) oder auch selektives Lasersintern herangezogen.

Der Aufbau der Gitterstruktur GS in der Struktur des ersten Werkstoffs W1 bzw. das Versehen des ersten Werkstoffs W1 mit der Gitterstruktur GS erfolgt also vorzugsweise in demselben Herstellungsverfahren, mittels schichtweiser additiver Verfahren.

Dementsprechend ist die Gitterstruktur GS vorzugsweise stoffschlüssig mit dem ersten Werkstoff verbunden und unmittelbar darauf angeordnet.

Eine entsprechende Verbindungsstelle des ersten Werkstoffs und ein Versehen dieser mit der Gitterstruktur GS zum Verbinden mit dem zweiten Werkstoff kann in diesem Sinne schon bei der Herstellung oder Bereitstellung des ersten Werkstoffs bedacht werden.

Der mit der Gitterstruktur GS versehene erste Werkstoff stellt vorzugsweise eine Verbundkomponente VK dar, welche zum anschließenden Fügen oder Verbinden mit dem zweiten Werkstoff vorgesehen ist.

Die Verbundkomponente VK kann beispielsweise eine monolithisch oder aus einem Stück oder demselben oder artgleichen Material (Metall) gefertigte oder vorgefertigte Komponente für eine Gasturbine oder ein Heißgasteil einer Gasturbine sein. Insbesondere kann es sich dabei um eine, insbesondere unbeschichtete, Turbinenschaufel handeln und/oder um ein vorzugsweise noch nicht mit einer Wärmedämm- und/oder Oxidationsschutzbeschichtung versehene Komponente einer Turbinenschaufel oder -brennkammer.

Das Verfahren umfasst weiterhin das Verbinden, insbesondere Verlöten, des zweiten Werkstoffs W2 mit der Gitterstruktur GS, so dass ein Werkstoffverbund 10 (vergleiche Figur 2) entsteht (vgl. c) in Figur 3). Schematisch sind in Figur 1 lediglich - zusätzlich zu der Verbundkomponente VK - Lotschichten L sowie der zweite Werkstoff W2 angedeutet.

Das Verlöten erfolgt vorzugsweise durch, dem Fachmann bekannte Mittel und bei entsprechend zweckmäßigen Temperaturen, insbesondere bei Temperaturen von über 700 °C, vorzugsweise über 800 °C, beispielsweise 1050 °C.

Bei dem Verlöten wird insbesondere mindestens eine der Komponenten - gewählt aus Gitterstruktur GS und zweitem Werkstoff mit dem Lot versehen und die jeweils andere Komponente dann bei der entsprechenden Lottemperatur gefügt. Wie in Figur 1 dargestellt, können auch sowohl die Gitterstruktur GS als auch der zweite Werkstoff W2 zunächst gegebenenfalls unter Erwärmung auf eine Lottemperatur mit einem Lot versehen und anschließend gefügt werden.

Figur 2 zeigt den Werkstoffverbund 10, welcher durch das erfindungsgemäße Verfahren aus dem ersten Werkstoff und dem zweiten Werkstoff entstanden ist.

Im Gegensatz zur Darstellung in den Figuren kann die Gitterstruktur GS zum Verlöten mit einem Lot-Binder-Gemisch und/oder einem Lot-Füller-Gemisch versehen werden, bzw. Gitterzwischenräume der Gitterstruktur GS mit dem genannten Gemisch gefüllt oder infiltriert werden. Dies kann sowohl für die mechanische Stabilität des Werkstoffverbunds 10 als auch für die erfindungsgemäße Aufgabe, d.h. beispielsweise das Ausgleichen von mechanischen Spannungen im Werkstoffverbund 10 vorteilhaft sein.

Vorzugsweise weist der in Figur 2 gezeigte Werkstoffverbund 10 keine Puffer- oder Haftvermittlungsschicht zum Ausgleich von mechanischen Spannungen auf.

Figur 3 zeigt anhand eines Flussdiagramms die erfindungsgemäßen Verfahrensschritte.

Der mit dem Bezugszeichen a) gekennzeichnete Verfahrensschritt betrifft das Bereitstellen des ersten Werkstoffs W1 und des zweiten Werkstoffs W2.

Verfahrensschritt b) betrifft das Versehen des ersten Werkstoffs W1 mit der Gitterstruktur GS, wie oben beschrieben.

Verfahrensschritt c) betrifft das Verbinden, insbesondere Verlöten, des zweiten Werkstoffs W2 mit der Gitterstruktur GS, so dass - wie oben beschrieben - der Werkstoffverbund 10 entsteht.

Alternativ kann das Verbinden des ersten Werkstoffs und des zweiten Werkstoffs durch ein anderes Fügeverfahren, beispielsweise durch Schweißen, Pressen, Kleben, Formen oder Sintern erfolgen.

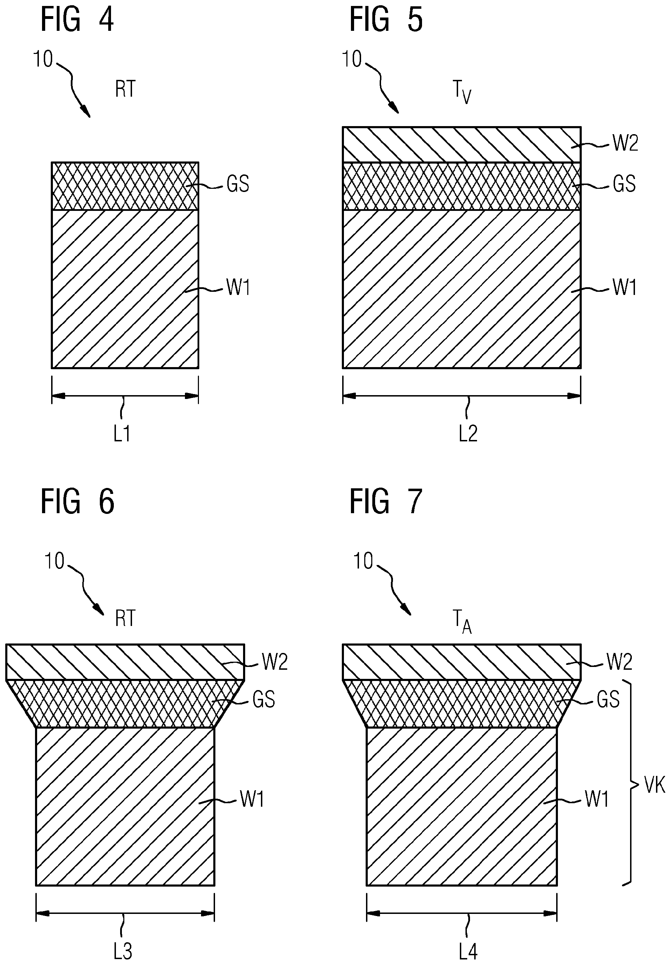

Figur 4 zeigt schematisch eine alternativ Abbildung des mit der Gitterstruktur versehenen ersten Werkstoffs W1 analog zur Darstellung der Figur 1. In horizontaler Richtung weist der erste Werkstoff W1 sowie die damit verbundene Gitterstruktur GS eine Länge oder Breite L1 auf. Diese Länge entspricht vorzugsweise der Länge der entsprechenden Komponenten bei Raumtemperatur RT.

Figur 5 zeigt schematisch den gleichen Aufbau aus Figur 1, wobei jedoch zusätzlich der zweite Werkstoff W2 bei einer Temperatur Tᵥ mit der Gitterstruktur verbunden wurde (vergleiche oben). Die Temperatur Tᵥ beispielsweise einer Temperatur zwischen 800 °C und 1050 °C oder auch mehr oder weniger entsprechen. Im Gegensatz zur Darstellung der Figur 4 ist zu erkennen, dass - durch die thermische Ausdehnung - der erste Werkstoff W1 bzw. der entsprechende Werkstoffverbund 10 eine Länge L2 größer L1 aufweist.

Figur 6 zeigt schematisch ein Abkühlen des Werkstoffverbunds 10 von der Temperatur Tᵥ (erneut) auf Raumtemperatur RT. Durch das Abkühlen hat sich der erste Werkstoff W1 auf die Länge L3 (größer L1 und l2) verkleinert oder zusammengezogen, wobei jedoch die entsprechende Länge oder Breite (nicht explizit gekennzeichnet) des zweiten Werkstoffs W2 aufgrund seiner Materialeigenschaften nicht um dasselbe Maß verkleinert hat, sodass eine erste mechanische Spannung über die Verbindung zwischen dem ersten Werkstoff W1 und dem zweiten Werkstoff W2 existieren sollte bzw. durch die Gitterstruktur GS ausgeglichen wird.

In Figur 7 ist letztlich der Werkstoffverbund bei einer Arbeitstemperatur T_{A} dargestellt, wobei sich der erste Werkstoff W1 - ausgehend von Raumtemperatur RT - auf eine Länge L4 (größer L3) ausgedehnt hat. Gleichzeitig hat sich durch die Temperaturerhöhung auch der zweite Werkstoff W2, beispielsweise geringfügig längenmäßig ausgedehnt. Es ist jedoch anhand des geringeren Längenunterschieds zu erkennen, dass nunmehr eine zweite mechanische Spannung - welche ebenfalls durch die Gitterstruktur GS ausgeglichen wird - vorliegt. Die zweite mechanische Spannung ist vorzugsweise kleiner als die beschriebene erste mechanische Spannung (vergleiche Figur 6). Mit anderen Worten ist anhand der Figuren 4 bis 7 beschrieben, dass die Gitterstruktur GS vorzugsweise derart bereitgestellt wird bzw. der erste Werkstoff W1 derart mit der Gitterstruktur GS versehen wird, dass eine Spannungsrelaxation möglichst zweckmäßig an einen heißen Zustand oder an die Arbeitstemperatur T_{A} angepasst ist, d.h., dass in diesem heißen oder Betriebszustand eine zweckmäßig geringere mechanische Spannung in dem Werkstoffverbund 10 vorherrscht und demgemäß vorzugsweise auch über die Gitterstruktur GS ausgeglichen wird oder werden kann.

## Patentansprüche

1. Verfahren zum Fügen von Werkstoffen, umfassend:
- a) Bereitstellen eines ersten Werkstoffs (W1) und eines zweiten Werkstoffs (W2),
**gekennzeichnet durch** folgende Schritte:
- b) Versehen des ersten Werkstoffs (W1) an einer Verbindungsstelle (VS) mit einer Gitterstruktur (GS), wobei der erste Werkstoff (W1) ein metallischer Werkstoff ist, insbesondere eine nickel- oder kobaltbasierte Superlegierung, wobei der zweite Werkstoff (W2) ein keramischer Werkstoff ist, insbesondere ein keramischer Faserverbundwerkstoff, und wobei die Gitterstruktur (GS) mit einem additiven Herstellungsverfahren, nämlich selektivem Laserschmelzen oder Elektronenstrahlschmelzen, hergestellt wird, wobei die Gitterstruktur (GS) aus demselben Material hergestellt wird wie der erste Werkstoff (W1) und
- c) Verbinden, insbesondere Verlöten, des zweiten Werkstoffs (W2) mit der Gitterstruktur (GS), so dass ein Werkstoffverbund (10) aus dem ersten Werkstoff (W1) und dem zweiten Werkstoff (W2) entsteht, wobei die Gitterstruktur (GS) derart ausgebildet wird, dass Spannungen in dem Werkstoffverbund (10) durch die Gitterstruktur (GS) zumindest teilweise kompensiert werden, wobei der Werkstoffverbund (10) keine Puffer- oder Haftvermittlungsschicht zum Ausgleich von mechanischen Spannungen aufweist.

2. Verfahren gemäß Anspruch 1, wobei der erste Werkstoff (W1) mit einem additiven Herstellungsverfahren, beispielsweise selektivem Laserschmelzen oder Elektronenstrahlschmelzen, hergestellt wird.

3. Verfahren gemäß Anspruch 1 oder 2, wobei die Gitterstruktur (GS) in demselben Herstellungsverfahren mit dem ersten Werkstoff (W1) hergestellt wird, um eine Verbundkomponente (VK) zu bilden.

4. Verfahren gemäß Anspruch 3, wobei die Verbundkomponente (VK) ein Teil einer Gasturbine, vorzugsweise ein heißgasbeaufschlagtes Teil einer Gasturbine, ist.

5. Verfahren gemäß einem der vorhergehenden Ansprüche, wobei der zweite Werkstoff (W2) über die Gitterstruktur (GS) mit dem ersten Werkstoff (W1) verlötet und die Gitterstruktur (GS) mit einem Lot-Binder-Gemisch infiltriert wird.

## Claims

1. Method for joining materials, comprising:
- a) providing a first material (W1) and a second material (W2),
**characterized by** the following steps:
- b) providing the first material (W1) at a joint (VS) with a lattice structure (GS), wherein the first material (W1) is a metallic material, in particular a nickel-based or cobalt-based super alloy, wherein the second material (W2) is a ceramic material, in particular a ceramic fibre-reinforced material, and wherein the lattice structure (GS) is manufactured by an additive manufacturing method, specifically selective laser melting or electron-beam melting, wherein the lattice structure (GS) is manufactured from the same material as the first material (W1); and
- c) connecting, in particular soldering, the second material (W2) to the lattice structure (GS) such that a material composite (10) from the first material (W1) and the second material (W2) is created, wherein the lattice structure (GS) is configured in such a manner that stresses in the material composite (10) are at least partially compensated for by the lattice structure (GS), wherein the material composite (10) does not have any buffer layer or adhesion-promoting layer for compensating mechanical stresses.

2. Method according to Claim 1, wherein the first material (W1) is manufactured by an additive manufacturing method, for example selective laser melting or electron-beam melting.

3. Method according to Claim 1 or 2, wherein the lattice structure (GS) is manufactured in the same manufacturing method, conjointly with the first material (W1), so as to form a composite component (VK).

4. Method according to Claim 3, wherein the composite component (VK) is part of a gas turbine, preferably a hot-gas-impinged part of a gas turbine.

5. Method according to one of the preceding claims, wherein the second material (W2) by way of the lattice structure (GS) is soldered to the first material (W1), and the lattice structure (GS) is infiltrated by a solder/binder mixture.

## Revendications

1. Procédé de jonction de matériaux, comprenant :
- a) on se procure un premier matériau (W1) et un deuxième matériau (W2),
**caractérisé par** les stades suivants :
- b) on munit, en un point (VS) de liaison, le premier matériau (W1) d'une structure (GS) en grille, dans lequel le premier matériau (W1) est un matériau métallique, notamment un superalliage à base de nickel ou de cobalt, dans lequel le deuxième matériau (W2) est un matériau céramique, notamment un matériau composite en fibre céramique, et dans lequel on fabrique la structure (GS) en grille par un procédé de fabrication additif, à savoir par fusion laser sélective ou par fusion par faisceau d'électrons, dans lequel on fabrique la structure (GS) en le même matériau que le premier matériau (W1), et
- c) on relie, notamment on brase, le deuxième matériau (W2) à la structure (GS) en grille, de manière à créer un composite (10) de matériau composé du premier matériau (W1) et du deuxième matériau (W2), dans lequel on constitue la structure (GS) en grille de manière à compenser, au moins en partie par la structure (GS) en grille, des contraintes dans le composite (10) de matériau, le composite (10) de matériau n'ayant pas de couche tampon ou de colle pour la compensation de contraintes mécaniques.

2. Procédé suivant la revendication 1, dans lequel on fabrique le premier matériau (W1) par un procédé de fabrication additif, par exemple par fusion laser sélective ou par fusion par faisceau d'électrons.

3. Procédé suivant la revendication 1 ou 2, dans lequel on fabrique la structure (GS) en grille dans le même procédé de fabrication que le premier matériau (W1) pour former un composant (VK) composite.

4. Procédé suivant la revendication 3, dans lequel le composant (VK) composite est une partie d'une turbine à gaz, de préférence une partie soumise à du gaz chaud d'une turbine à gaz.

5. Procédé suivant l'une des revendications précédentes, dans lequel on brase le deuxième matériau (W2) au premier matériau (W1) par l'intermédiaire de la structure (GS) en grille et on infiltre la structure (GS) en grille d'un mélange de brasure et de liant.
